# EUROPEAN PATENT APPLICATION

(11) **EP 4 537 661 A1**
(43) Date of publication of application: **16.04.2025**
(21) Application number: 23383040.5
(22) Date of filing: 10.10.2023
(51) Int. Cl.: A01M 21/04

(54) **DEVICE FOR THE ELIMINATION OF WEEDS AND PESTS**

(71) Applicant: Lab4Impact, S.L., 31500 Tudela Navarra (ES)
(72) Inventor: ARNABAT CASTELLVI, Carlos, 08799 Sant Pere Molanta (Barcelona) (ES)
(74) Representative: Balder IP Law, S.L.

(57) **Abstract**

The device of the invention combines the unique ability of both generating three types of microwaves, of different wave, frequency and wavelength in a single unit, generated by a triple magnetron, or a magnetron combined with two SSPA solid state units (11-12-13), and applying them through three different types of applicators, two air diffusers and an inductive diffuser.

## Description

### FIELD OF THE INVENTION

The present invention relates to a device that has been specifically designed to selectively eliminate weeds and insect pests for soil and crops.

The invention is therefore focused on the agriculture, urban planning, infrastructure and golf courses, and more specifically on the machinery used in these fields/markets.

### BACKGROUND OF THE INVENTION

In the scope of practical application of the invention, equipment for the selective elimination of weeds is known, as well as equipment for the elimination of insect pests, but the two are structurally and functionally very different, so that there is no known hybrid equipment such as the one described in the present invention, which allows the joint management of both problems, which are common in crops.

In this regard, although there is known equipment for the application of electromagnetic waves on soil and crops, both the type of wave and the application means are always the same, which greatly limits the type of treatment to be applied, as well as its effectiveness.

### DETAILED DESCRIPTION OF THE INVENTION

The device proposed by the invention fills the above-mentioned technical gap based on a highly effective solution.

To this end, the device of the invention combines the unique ability of generating three types of microwaves, of different wave, frequency and wavelength in a single unit, as well as of applying them through three different types of applicators.

More specifically, the device consists of a triple magnetron, or a combined magnetron having two SSPA solid-state units, giving it the unique ability of generating three types of microwaves in a single unit.

These subsystems are associated with an internal sine-wave controller as well as a wave synchronisation unit that allows synchronising and adapting the three types of electromagnetic waves generated and emitting them coupled together.

To do this, the device has three independent amplifiers that amplify the power, intensity and adaptation of each of the electromagnetic wave frequencies in a controlled way (by receiving an external electronic control).

At the same time, these signals are passed through a wave stabilisation unit capable of managing the three types of electromagnetic wave simultaneously, allowing to isolate the reflection, impedance and bypass of the electromagnetic signal that may lead to a decrease in power or loss of efficiency.

From this structuring, the device produces three types of electromagnetic waves that aim to propagate the effect of microwaves on weeds/pests with the lowest possible temperature (maximum 55 °C) but with a multiplying effect on the excitation of water molecules.

As a consequence, a dehydrating effect is achieved, not due to heat propagation. This allows for the conservation of soil microbiota and biodiversity.

For the application of these microwaves, it is envisaged that the device will have three microwave diffusers, two air diffusers and one inductive diffuser.

More specifically, the first of the aerial wave diffusers consists of a metal pipe of conical, square, rectangular or cylindrical shape, equipped with reflective fins and slots that have a mechanical movement of opening and closing and oscillation by means of solenoids so that they move the effect of the waves "like a fan that makes a sweeping effect" to facilitate that the diffusion of the microwaves on the ground is not a static cone, but is a cone effect oscillating at 65° (oscillation fan angle). This diffuser device is controlled and receives orders and becomes a slave to an external electronic system that governs it.

The second of the wave diffusers consists of a funnel-shaped metal pipe, which has, in its wider mouth, an arrangement of fins that support a plastic element that acts as an ellipsoidal lens and that performs the optical amplification of the power of the microwaves produced by magnetrons or SPA solid state units. The effect achieved is to multiply the effect of the initially generated microwave power.

Finally, the inductive diffuser consists of a plastic plate where a series of slots are made and in which interconnected metal bars are arranged. Microwaves travel by wire to the metal bars. This inductive applicator assembly crawls over the surface of the ground and activates or deactivates (externally controlled, slave to an external system) and produces electromagnetic fields by induction.

The device thus described is capable of working as a slave, through a communications port, so that it is controlled by an external unit, so that its operation obeys specific needs controlled by said external unit, which allows it not to be operating and emitting electromagnetic fields permanently or indiscriminately and therefore only to be activated when necessary. This external unit will be equipped with Artificial Intelligence, Machine Learning or Big Data so that it is connected to an additional module that includes temperature sensors, humidity sensors, a GPS module, as well as one or more hyperspectral cameras, elements that said external unit uses to optimise and calculate the exact moment and area in which to fire the microwave pulses on its targets (weeds/pests).

Finally, this equipment will be assisted by an energy source, preferably a power generator, of any conventional type.

It only remains to point out that, the device described herein can be developed in different sizes, so that although it has preferably been planned to be implanted on a tractor vehicle, in order to be able to treat the largest surface in the shortest possible time, the device could adopt a significantly smaller size, in order to offer a portable equipment that can be carried by a person, either towed under traction on rolling elements (wheels, rollers or similar) or suspended in the air by means of a harness-type element fastened to the body of the carrying person.

From this structuring, equipment is obtained that allows weeds/pests to be eliminated externally from the ground with the advantage of electromagnetic wave technology, which helps to have the ability to affect the roots of weeds, as well as the seeds of weeds. In this way the fertile capacity of weeds or their ability to regrow is hampered.

### DESCRIPTION OF DRAWINGS

To complement the description that will then be made and in order to help a better understanding of the characteristics of the invention, according to a preferred example of practical implementation thereof, a set of drawings is attached as an integral part of said description, where, for illustrative and nonlimiting purposes, the following has been represented:
Figure 1 shows a side elevation view of a tractor vehicle equipped with a device for weed and pest elimination made according to the object of the present invention.
Figure 2 shows a perspective detail of the device with its casing partially removed.

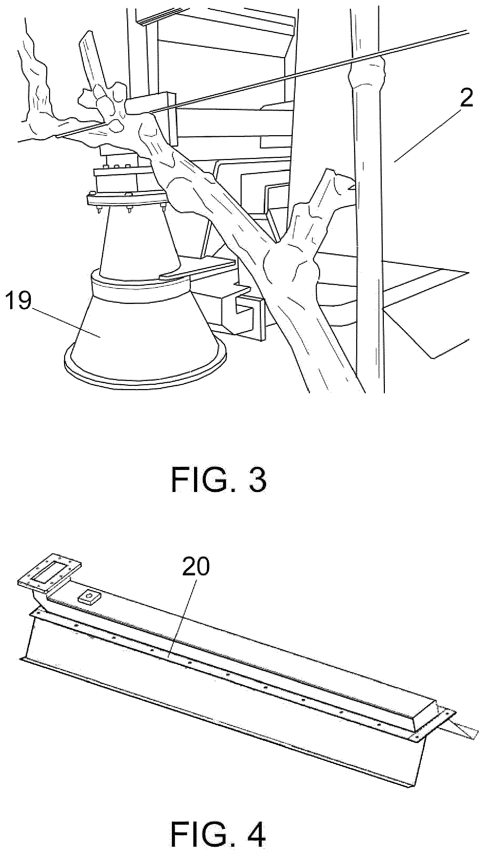

Figure 3 shows a perspective detail of the first aerial wave diffuser including the device of the invention.
Figure 4 shows a perspective detail of the second aerial wave diffuser including the device of the invention.
Figure 5 finally shows a schematic block diagram of the essential components involved in the device of the invention.

### PREFERRED EMBODIMENT OF THE INVENTION

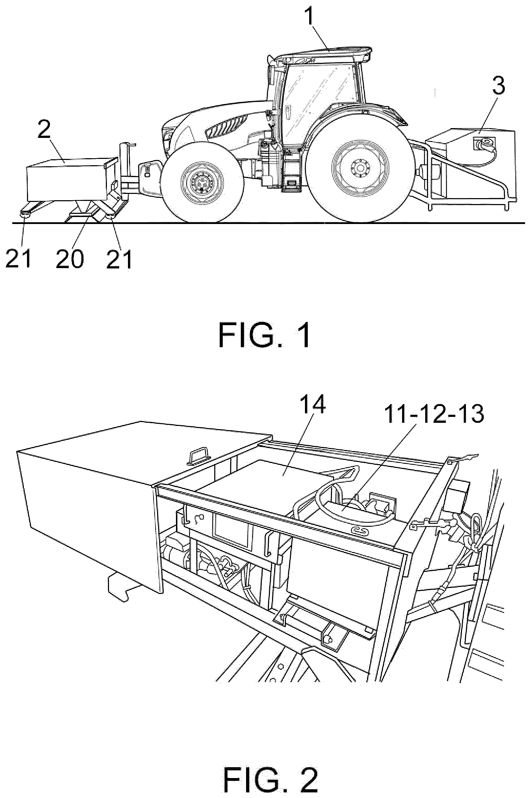

In Figure 1, a device developed in accordance with the object of the present invention is depicted, merely by way of example, which, in said example, is intended to be fitted to a tractor vehicle (1) integrated in a housing (2) equipped with means of attachment to said tractor, and being assisted by a power generator (3) placed at the rear of the tractor (1); however, as mentioned above, the equipment of the invention is scalable and can therefore be manufactured in many different sizes, depending on the surface to be treated and whether portable or towed equipment is required.

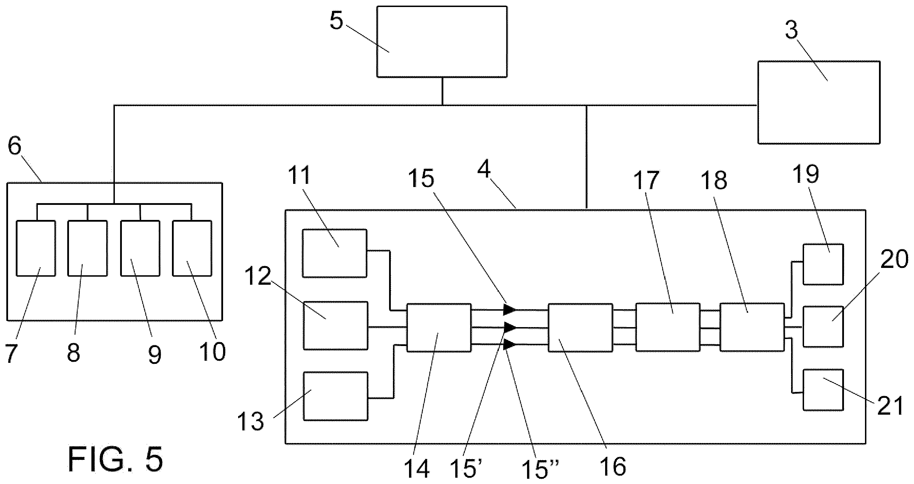

In any case, and according to Figure 5, the device for the elimination of weeds and pests (4) can operate as an independent equipment, applying microwaves continuously, or operate as a slave, through a communications port, and be connected to an external unit (5), so that its operation obeys specific needs controlled by said external unit, through a head module (6) that is integrated into the housing (2) itself, and that includes temperature sensors (7), humidity sensors (8), a GPS module (9), as well as one or more hyperspectral cameras (10).

From these elements, the external unit (5) is able to calculate the exact moment and area in which to fire the microwave pulses on its targets, whether these are weeds or insect pests.

Turning to the weed and pest elimination device (4) itself, it consists of a triple magnetron, or a combined magnetron having two SSPA solid-state units (11-12-13), giving it the unique ability of generating three types of microwaves in a single unit.

These subsystems are associated with a sine wave controller (14) provided with electromagnetic signal capacitors and rectifiers and whose functionality is to adapt the three different wave frequencies previously generated in the magnetron type or solid type SSPA generators.

The three resulting electromagnetic wave types are routed to three independent amplifiers (15-15'-15"). The functionality of these amplifiers is to increase the power of the electromagnetic waves to the power needed to irradiate (depending on the characteristics of the weed/pest to be eliminated). This information is provided by the external equipment (5).

The three amplified electromagnetic waves are routed to a main magnetron (16), since it has the signal emitting controls mounted integrally.

The functionality of the signal emitters is to control the precise moment in which the microwaves need to be diffused or applied on the targets (weeds/ pests).

From the signal emitters and by means of a triple waveguide specially designed to route the three types of microwaves, the generated signals are passed to a wave stabilisation unit (17).

This device allows isolating signal bypasses and bounces that may lead to a decrease in power, a bounce of electromagnetic signals that may potentially damage the system.

From the wave stabilisation unit (17) and by means of the triple waveguide, the three types of electromagnetic waves are routed to a wave synchronisation unit (18).

The functionality of the wave synchronisation unit (18) is to synchronise the type and power of electromagnetic waves as a function of the physical characteristics of the target(s) to be irradiated, whether these are going to be weeds/pests, their density in water molecules, their potential mass (information that is given externally).

This unit is connected to the triple waveguide which finally routes the microwave flow to three types of wave diffusers (19-20-21).

The first type of wave diffusers (19) consists of a metal pipe of conical, square, rectangular or cylindrical shape, equipped with reflective fins and slots that have a mechanical movement of opening and closing and oscillation by means of solenoids so that they move the effect of the waves to facilitate that the diffusion of the microwaves on the ground is not a static cone, but is a cone effect oscillating at 65° (oscillation fan angle).

This type of diffuser will be used when the application of the treatment on the weeds is to be applied over the width of the lane (crop planting width), for example in the lane of a vineyard, in order to eliminate the weeds/pests contained in the width of the lane of the vineyard.

The second type of wave diffusers (20) consists of a funnel-shaped metal pipe, which has, in its wider mouth, an arrangement of fins that support a plastic element, with an angle between 25° and 165°, that acts as an ellipsoidal lens and that performs the optical amplification of the power of the microwaves produced by magnetrons or SPA solid state units. The effect achieved is to multiply the effect of the initially generated microwave power.

Thanks to the mechanical fan movement of the microwaves and the optical effect of this lens, the weed/pest elimination ability is increased and also the speed of the robot in hectares/h.

This type of diffuser will be used to apply the treatment on weeds or pests in more selective areas or of more reduced dimensions. For example, in a vineyard, this type of diffuser will be used to treat weeds or pests in the vine plant-to-vine plant space, or for example in a fruit tree crop to apply the weed/pest elimination treatment in the tree-to-tree space.

The third type of wave diffusers (21) is embodied in an inductive diffuser.

It consists of a plastic plate where a series of slots are made and in which interconnected metal bars are arranged. Microwaves travel by wire to the metal bars. This inductive applicator assembly crawls over the surface of the ground and activates or deactivates (externally controlled, slave to an external system) and produces electromagnetic fields by induction.

In this way, an extremely effective and versatile device is achieved when it comes to treating all types of weeds and pests.

## Claims

1. A device for the elimination of weeds and pests, **characterised in that** it consists of a housing (2) in which a triple magnetron is integrated, or a magnetron combined with two SSPA solid state units (11-12-13) generating three types of microwaves, these subsystems being associated with a sine wave controller (14), as well as an amplification circuit (15-15'-15") that feeds a main magnetron (16), wherein it is provided that the generated signals are passed to a wave stabilisation unit (17) and a wave synchronisation unit (18) that, through a triple waveguide, routes the flow of microwaves generated towards three types of wave diffusers (19-20-21), two air diffusers and an inductive diffuser.

2. The device for the elimination of weeds and pests, according to claim 1, wherein the device operates as a slave, being linked through a communications port to an external unit (5) with artificial intelligence and which in turn is connected to a head module (6) that is integrated into the housing (2) itself, and which includes temperature sensors (7), humidity sensors (8), a GPS module (9), as well as one or more hyperspectral cameras (10).

3. The device for the elimination of weeds and pests, according to claims 1 and 2, wherein the device for the elimination of weeds and pests (4), the external unit (5) and the head module (6) are assisted by a power generator (3).

4. The device for the elimination of weeds and pests, according to claim 1, wherein the first type of wave diffusers (19) consists of a metal pipe of conical, square, rectangular or cylindrical shape, equipped with reflective fins and slots that have a mechanical movement of opening and closing and oscillation by means of solenoids.

5. The device for the elimination of weeds and pests, according to claim 1, wherein the second type of wave diffusers (20) consists of a funnel-shaped metal pipe, which has, in its wider mouth, an arrangement of fins that support a plastic element, with an angle between 25° and 165°, that acts as an ellipsoidal lens and that performs the optical amplification of the power of the microwaves produced by magnetrons or SPA solid state units.

6. The device for the elimination of weeds and pests, according to claim 1, wherein the third type of wave diffusers (21) is embodied in an inductive diffuser consisting of a plastic plate where a series of slots are made and in which interconnected metal bars are arranged and fed by the signal to be emitted.
